Europäisches Patentamt

European Patent Office

Office européen des brevets

(11) Publication number: **0 253 029**
**A1**

# EUROPEAN PATENT APPLICATION

(21) Application number: 86305304.7

(22) Date of filing: **10.07.86**

(51) Int. Cl.4: **C02F 1/04** , B01D 3/00 , B01L 9/04

(43) Date of publication of application:
**20.01.88 Bulletin 88/03**

(84) Designated Contracting States:
**DE FR GB IT**

(71) Applicant: **Wang, Keng-Ben**
**7th Floor, No. 148 Leh Yeh Street**
**Taipei(TW)**

(72) Inventor: **Wang, Keng-Ben**
**7th Floor, No. 148 Leh Yeh Street**
**Taipei(TW)**

(74) Representative: **Thomson, Paul Anthony et al**
**Potts, Kerr & Co. 15, Hamilton Square**
**Birkenhead Merseyside L41 6BR(GB)**

(54) **A distilled drinking water fountain.**

(57) This invention is a distilled drinking water fountain which possesses an evaporation chamber (20) to vaporize water, a preheating chamber (52) to cool the steam, then a fin-type condenser (40) to condense steam by air, and a storage chamber (30) to collect the condensate for drinking. Both the evaporation (20) chamber and the storage chamber (30) are equipped with water level switch to prevent the water storage (30) from exceeding the safe quantity and the heating element (21) of the evaporation chamber (20) from being burned due to insufficient water.

FIG.2

# A distilled drinking water fountain

This invention retates to a distilled drinking water fountain for home use comprising an evaporation chamber to vaporize water resulting from the steam being cooled by the preheating chamber, then a fin-type condenser to condense steam by air, and a storage chamber to collect the condensate for drinking.

Due to the industrial development which has also triggered ecological change and imbalance,human environment has been polluted and disrupted to the extent that improvement is greatly needed. The disasters caused by polluted water resources include many fatal diseases such as black foot disease, mercury poisoning, etc.. The characteristics of the industrial calamity is that the pollution can not be detected at an early stage until it has become irremediable several years later. In general, how to prevent our living environment from being polluted is an important problem which is also the major purpose of this invention.

The primary purpose of this invention is to provide a new design of distilled drinking water fountain.

Another purpose of this invention is to make the distilled water easily accessible. Since the water resource pollution is getting worse,the sale amount of bottled distilled water keeps rising. However, the manufacturers use brush and detergent to clean bottles which does not meet the hygienic standard. Thus, this invention can provide to consumers a device to produce distilled water directly for drinking by themselves and rid the flaws of bottled distilled water.

This invention employs the method of producing distilled water and has improved distillation efficiency. With its simple design, it can be accepted easily in the family.

In order to achieve the above purposes, this invention provides a distilled drinking water fountain which includes an equipment frame with a water supply apparatus inside it , an evaporation chamber with a water level control switch and a heating element, a preheating chamber, an air cooling condenser, a water storage chamber with a water level control switch, and a drinking faucet. Water is first vaporized at evaporation chamber. Steam is then cooled down -at preheating chamber and condensed at the fin shape air cooling condenser. This way, steam can be quickly condensed and collected at the storage chamber for drinking.

One way of carrying out the invention is described in detail below with reference to drawings which illustrate only one specific embodiment, in which:

Figure 1 is the front view of this invention, the portional cut view shows the heating tubes inside the evaporation chamber;

Figure 2 is the sectional view taken along the line 2-2 of Figure 1;

Figure 3 is the sectional view taken along the line 3-3 of Figure 1;

Figure 4 is the cut view of this invention to show the preheating chamber;

Figure 5 is the top view of this invention;

Figure 6 is the rear view of this invention;

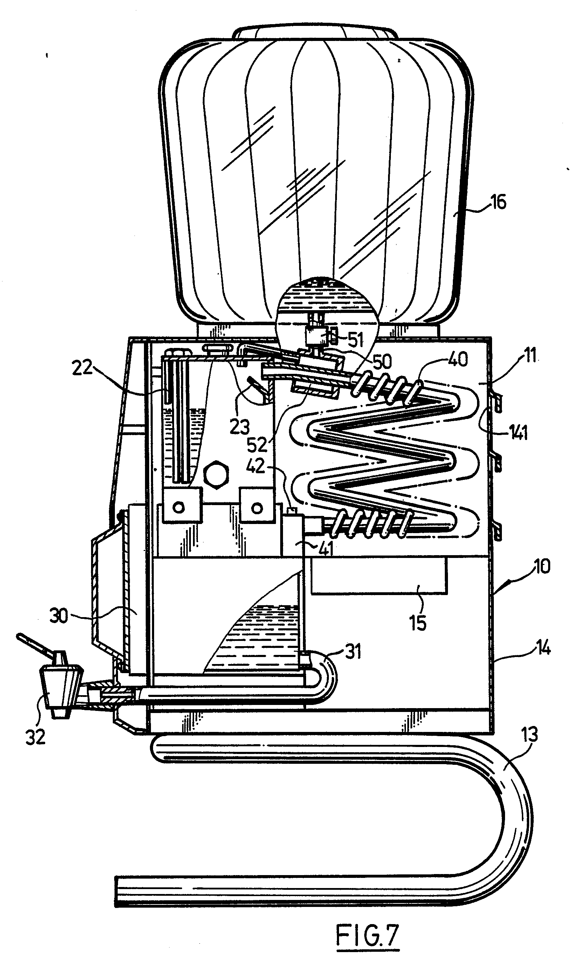

Figure 7 is the side cut view of this invention; and

Figure 8 is the automatic control circuit diagram of this invention.

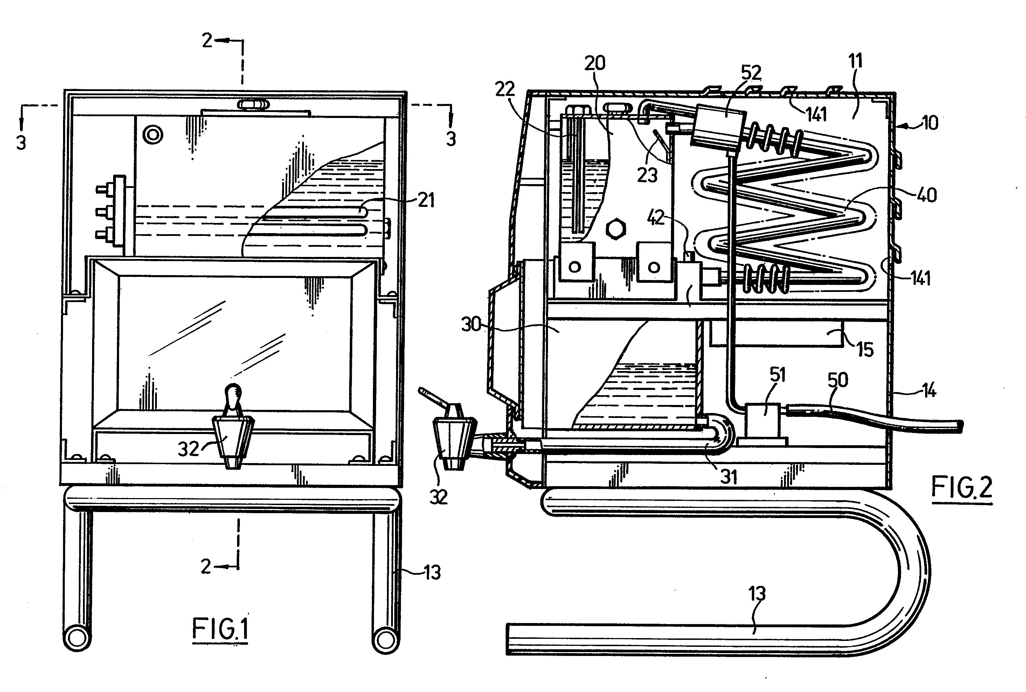

As shown in Figures 1 through 3, this invention possesses an equipment frame (10) to form a space (11) which contains an evaporation chamber (20), water storage chamber (30), condenser (40), and water supply pipe (50), etc.. The lower end of the storage chamber (30) is connected with an effluent pipe (31) which goes directly to the press-button type faucet (32) in front of the equipment frame (10). The equipment frame (10) is kept at an appropiate distance above table by a pair of U-shaped supporting tubes (13) at its lower end. This design not only gives one a neat feeling but also provides a space high enough for cup to be placed under the water faucet.

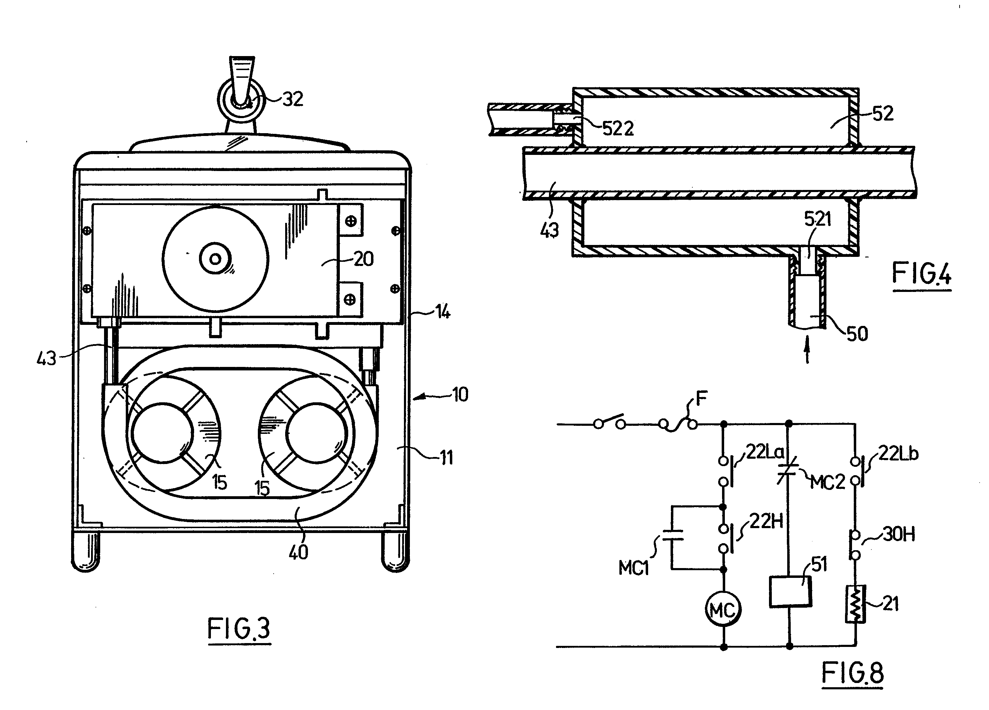

Water is supplied from the rear side of the water storage room (30), passing through a water supply pipe (50) and a solenoid valve (51), and enters into a preheater (52). There are a variety of ways to set up preheater (52). One of them is shown in Figure 4. The characteristics of this design is that the preheater (52) is installed against the outlet of the evaporation chamber (20). Thus, the preheaded water is injected into the evaporation chamber (20) from the top. The bottom of the evaporation chamber (20) contains an adjustable heating element. Furthermore, the evaporation chamber (20) also possesses a water level control switch(22). Which utillizes an electrode to control high and low water levels. When the water level control switch (22) is at its high level switch, the solenoid valve (51) would be closed to prevent water overflow from the evaporation chamber (20). If the low level switch is on due to insufficient water level in the evaporation chamber (20), the power supply of the heating element (21) will be cut off heating element (21) from to prevent burning out.

After water is boiled in the evaporation chamber (20), steam produced will flow across a baffle (23) (which is used to prevent steam-moisture from rushing into the outlet ), enter into the center of the preheating chamber (52) through the water supply pipe (50), and then become condensed again. This invention also utilizes the heat exchange in the preheating chamber (52) to preheat the cold water inside the water supply pipe (50), so as to conserve the heat consumption of the heating element (21).

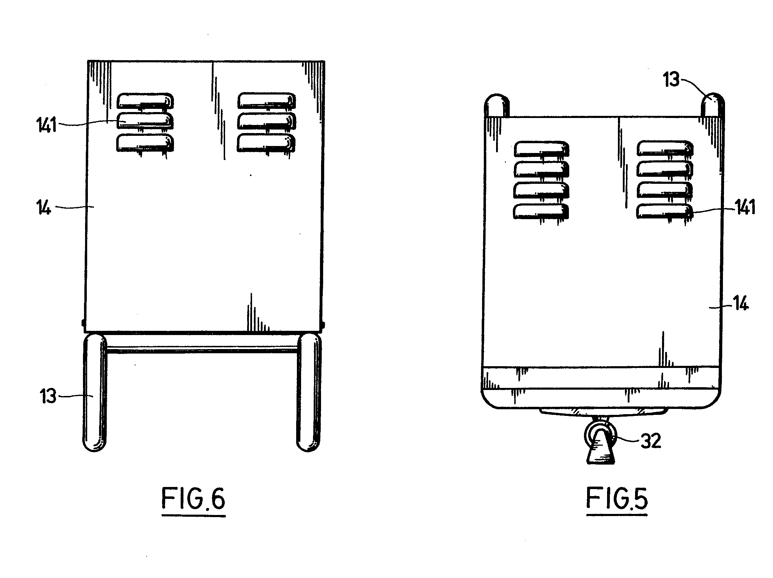

The condensate flows from the preheating chamber (52) into the condenser (40) which is made of fin-shaped tubings, and then enters the water storage chamber (30). The connection head (41) between the condenser (40) and water storage chamber (30) is specially equipped with an exhaust outlet (42) that acts as an safety deviced for this invention. The exhaust outlet (42) makes the whole design become open type even though the evaporation chamber (20) and condenser (40) are close type designs. Therefore, the evaporation chamber (20) can switch from the pressure vessel to the open type vessel which reduces the risk of exceeding the atmospheric pressure to minimum. The top and the rear of the equipment shell (14) of the equipment frame (10), as shown in Figures 5 and 6, have several ventillation holes (141) and fan (15) installed beneath the condenser (40) which allow air to be blown to the condenser 40 to increase the cooling efficiency. The hot air is then exhausted through the ventillation holes (141), which allows this invention to be used as a heater in the cold climates.

The structure of the aforesaid preheater (52), as shown in Fig. 4, is a closed cylindrical chamber. In addition, at least one water inlet (521) and one water outlet (522) are installed on the wall of the preheater (52). The water inlet (521) is connected with the upstream of water supplying pipe (50), while the outlet (522) is connected with the downstream pipe between the water supplying pipe (50) and the evaporation chamber (20). At the central zone of the preheater (52), one hot water tube 43 is welded to connect the evaporation chamber (20) and the condenser (40). The hot water tube (43) and the preheater (52) are tightly welded together such that the cold water inputted from the water inlet (521) of the preheater (52) can be heated through the tube wall of the hot water tube (43) (acting as a heat exchanger) inside the preheater (52). This way, cold water entering preheater (52) is heated and high temperature water inside the hot water tube (43) can be initially cooled. This design makes the preheater (52) fully efficient.

The above example is applied under the condition that the water source can (16) be fully supplied and can be connected with water pipe at upstream of the solenoid valve (51). However, if the water source can not be conviently supplied, the design shown in the Fig. 8 can be used. The characteristics of this design is to install the solenoid valve (51) of the previous example at the location above the central zone of the equipment frame (10) and still allow it to transfer cold water to the preheater (52) through the connection with a downstream pipe. However, the upstream of the solenoid valve (51) is connected to the water outlet (522) located at the bottom of water storage can (16) which is installed on the top of the equipment frame (10). Water of the previous example flows through the solenoid valve (52) and enters the evaporation chamber (20) by means of the hydrostatic pressure from the water source. While, in this example, it is the gravitation force produced by the elevation difference between the water storage can (16) and the evaporation chamber (20) that allows water to flow through the solenoid valve (51), due to the gravitational head produced by the elevation difference between the water storage can (16) and the evaporation chamber (20). The aforesaid water storage chamber (30) is also equipped with a water level control switch as installed in the evaporation chamber (20). The low level switch actuates the solenoid valve (51) to open for water supply, and the high level switch cut off the power source for the heating element (21) of the evaporator chamber (20) to terminate the steam production.

The automatic control device of this invention is shown in Fig. 8. The integrated circuit is equipped with a fuse F to assure the safety loading. As the water level in the evaporation chamber (20) becomes low, the solenoid valve (51) opens automatically for water supply. When the water level of the evaporation chamber (20) exceeds the low water level switch, the heating element (21) will automatically start to heat water. If the water level exceeds the high water level switch, the solenoid valve (51) will close automatically, while the heating element (21) keeps the heating process still to boil water. The steam would be condensed initially through the moisture separator (23), further cooled down at preheater (52) and the condenser (40), and finally the distilled water transported to the water storage chamber (30). As long as the water level of the water storage chamber (30) is higher that the high water level switch, the heating element (21) in the evaporation chamber (20) will stop heating to prevent more condensed water from entering the water storage chamber (30).

The heating element (21) has a multi-stage heating control device to give the option for the distilled water production rate when it is necessary.

As shown in Fig. 8, the power source switch MC which is used to control the heating element (21) can be made with magnetic switch, relay, or other equivalent components. The indicating light is also an optional item. Even the digital water level indicatior can be installed with the water level switch of the water storage chamber (30). However, those belong to the detail of the manufacturing application.

The structure and device described above have fully demonstrated that the production process of distilled water can be utilized for home use either in the installation or the model design of this invention. It is fully automatic controlled which also includes the safety consideration. Furthermore, because the design fully utilizes the waste heat, now the distilled water production device no longer belongs only to the factory use, it can become one of the home appliance. This invention is particularly useful for the area where the water pollution is serious. the shipping of the distilled water is no longer required.

## Claims

1. A distilled drinking water fountain for home use comprising a water storage chamber (30), a faucet (32), and a housing (10) for a water supply apparatus (16), an evaporation chamber (20) which is equipped with a heating element (21), a preheating chamber (52), an air cooling condenser (40), and a drinking water pipe (50), characterised in that the preheating chamber (52) encloses the water supply pipe (50) between the evaporation chamber (20) and the condenser (40) so that the water to be distilled can use the waste heat of a steam outlet pipe (522) from the evaporation chamber (20) for preheating, whereas the high temperature water inside this outlet pipe (522) can also be precooled through the preheater (52) initially at the preheater (52) and continue to be cooled at the air cooling condenser (40).

2. A distilled drinking water fountain as claimed in claim 1, comprising at least a pair of U-shaped supporting feet (13) to support the equipment, characterised in that the open end of each U-shaped supporting foot (13) is located in the region of the drinking faucet (32) such that a space is reserved to place a cup under the faucet (32).

FIG.2

FIG.1

FIG.4

FIG.8

FIG.3

141

14

13

FIG.6

13

141

14

32

FIG.5

0 253 029

FIG.7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 256 159 (A. SALZER)<br>* Column 2, line 2 - column 3, line 37; figure 2 * | 1 | C 02 F    1/04<br>B 01 D    3/00<br>B 01 L    9/04 |
| X | DE-C- 349 586 (B. HILLIGER)<br>* Page 1, lines 19-53; figure * | 1 | |
| A | DE-C- 117 271 (G.G.J.B. MÜRRLE)<br>* Whole document * | 1,2 | |
| A | US-A-3 055 810 (R.E. SKOW)<br>* Figure 3 * | 1 | |
| A | US-A-4 247 369 (R.E. BEAN)<br>* Figure 1 * | 1 | TECHNICAL FIELDS SEARCHED (Int. Cl.4) |
| A | US-A-4 415 075 (McNESKY et al.)<br>* Figure 2 * | 1 | C 02 F<br>B 01 D<br>B 01 L |

The present search report has been drawn up for all claims

| Place of search | Date of completion of the search | Examiner |
|---|---|---|
| THE HAGUE | 30-03-1987 | VAN BELLEGHEM W.R. |